# EUROPEAN PATENT APPLICATION

(11) **EP 2 207 058 A1**
(43) Date of publication of application: **14.07.2010**
(21) Application number: 09181005.1
(22) Date of filing: 30.12.2009
(51) Int. Cl.: G02C 5/22

(54) **Hinge for spectacles and relative assembly method**

(30) Priority: 07.01.2009 IT UD20090001
(71) Applicant: Sommavilla, Andrea, 32042 Calalzo di Cadore (BL) (IT)
(72) Inventor: Sommavilla, Andrea, 32042 Calalzo di Cadore (BL) (IT)
(74) Representative: Petraz, Gilberto Luigi

(57) **Abstract**

Hinge for spectacles able to be used to articulate an arm (11) to a lug (12) of a frame for spectacles, comprising a first hinge element (13), associated or able to be associated with the lug (12), and a second hinge element (16) associated with the arm (11), able to be moved between a closed position and an open position with respect to the lug (12). The second hinge element (16) comprises attachment elements (21, 22) able to achieve a coupling through interference of the first hinge element (13) and the second hinge element (16), in which the first hinge element (13) is shaped so as to define substantially flat stop portions (14) and the attachment elements (21) are able to at least partly surround at least the stop portions (14) in order to maintain the arm (11) selectively and stably in correspondence at least with the open position and the closed position.

## Description

### FIELD OF THE INVENTION

The present invention concerns a hinge for spectacles, and the relative assembly method, to articulate an arm to the lug of a frame for spectacles.

### BACKGROUND OF THE INVENTION

Hinges for spectacles are known, to articulate an arm and a lug of a frame for spectacles.

Traditional elastic hinges generally consist of two hinge elements, of which one is associated with an arm and the other to the lug of the frame, shaped so as to define respective eyelets. The hinge elements are associated with each other by an attachment screw, inserted inside the eyelets, so as to articulate the arm to the lug.

Elastic hinges for spectacles are also known which provide to use elastic means, such as springs or suchlike, normally associated with the hinge element of the ann in order to elasticize the hinge. The elastic means determine an elastic force that confers stability on the arm in the normal open and closed positions, accompanies the opening and closing movement of the arm and also allows the extra travel on opening of the arm.

One disadvantage of said known hinges is that they need complex and laborious operations to assemble them, mainly deriving from the need to achieve the correct alignment of the eyelets of the hinge elements for the subsequent insertion and screwing of the attachment screw. Moreover, complex and laborious operations are also required to associate said elastic means to the hinge, which need suitable housing seatings; this considerably complicates the production of a single hinge.

Another disadvantage of said known hinges is that they need laborious operations to achieve both the hinge elements, which comprise mechanical processes to remove material, for example in order to shape the eyelets or to form the housing seatings, and also complex maintenance operations.

Furthermore, this type of articulation of the arm to the lug causes a rapid wear on the hinge elements, deriving from the friction exerted between the hinge elements following the movement of the arm with respect to the lug. This can cause a malfunctioning of the hinge, for example unwanted oscillations or tilting of the arm, and the need for frequent adjustments using the attachment screw in order to guarantee effective association of the hinge elements under all operating conditions. To prevent these problems of wear, it is known to use sealing elements, such as packings made of rubber material or similar, interposed between the hinge elements or inserted inside the eyelets. This solution further complicates the production of the hinge and its assembly, and also increases production costs.

Purpose of the present invention is to achieve a hinge for spectacles which is easy and economical to make, which does not need complex and laborious operations for assembly, and which also allows quick and easy maintenance operations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a hinge for spectacles according to the present invention is able to be used to articulate an arm to the lug of the spectacles. The hinge comprises a first hinge element, associated or able to be associated with the lug, and a second hinge element associated with the arm, able to be moved between a closed position and an open position.

According to a characteristic feature of the present invention, the second hinge element comprises attachment means able to achieve a coupling through interference of said first hinge element and said second hinge element, where said first hinge element is shaped so as to define substantially flat stop portions, and said attachment means are able to surround at least partly said substantially flat stop portions in order to keep said arm selectively and stably in correspondence at least with said open position and said closed position.

According to a variant of the present invention said first hinge element comprises a pin, substantially cylindrical in shape.

According to another variant of the present invention said stop portions comprise facetted planes of said pin.

According to a variant of the present invention said attachment means are shaped so as to define at least a substantially flat stop element, with a shape coordinated with the facetted planes, able to cooperate with said facetted planes so as to keep said arm selectively and stably in correspondence at least with said open position and said closed position.

According to another variant of the present invention, said first hinge element comprises guide means able to guide the movement of the arm at least from the closed position to the open position and vice versa.

According to another variant of the present invention, the attachment means are also shaped so as to define guiding elements, having a shape coordinated with said guide means, able to allow the movement of the arm at least from the closed position to the open position and vice versa.

According to another variant of the present invention, said guide means are also able to prevent the uncoupling of the first and second hinge element due to the reciprocal sliding with respect to a longitudinal axis of the first hinge element.

According to a variant of the present invention, the second hinge element is made in a single piece with the arm.

According to another variant of the present invention, the attachment means comprise lamellar extensions of the arm.

According to another variant of the present invention, the second hinge element is made by means of plastic deformation, for example molding, advantageously by using a single mold.

In this way, the hinge according to the present invention is easy and economical to make and does not need complex and laborious operations, nor does it require screws or pins, and therefore tools, in order to assemble/disassemble it Moreover, the cooperation between the substantially flat stop elements of the second hinge element and the substantially flat stop portions of the first hinge element determines a controlled and progressive movement of the arm with respect to the lug, even without screws and elastic means such as springs or suchlike, and confers stability on the arm both in the normal open and closed positions and also in possible intermediate positions.

For the production of the hinge elements according to the present invention, operations to remove material are also considerably reduced. Indeed, they are limited only to the first hinge element, so as to make for example said facetted planes, whereas the second hinge element is advantageously made by plastic deformation, which considerably reduces the production times of a single hinge.

The hinge according to the present invention also allows to simplify the maintenance operations of the hinge, and in general of the spectacles provided with said hinge. In fact, the coupling through interference of the hinge elements allows the arm to be removed from the lug quickly and easily, and this also allows to change the type of arm associated with the lug, as the user desires, according to circumstances and to particular aesthetic features.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a hinge for spectacles according to the present invention in an operating condition;
- fig. 2 is a view from above of an enlarged detail of fig. 1;
- fig. 3 is a view from above of a detail of fig. 1;
- fig. 4 is a three-dimensional view of a detail of fig. 1;
- fig. 5 is a variant of the hinge in fig. 2;
- fig. 6 is a view from above of an enlarged detail of fig. 5;
- fig. 7 is a three-dimensional view of a detail of fig. 5.

### DETAILED DESCRIPTION OF A PREFERENTIAL FORM OF EMBODIMENT

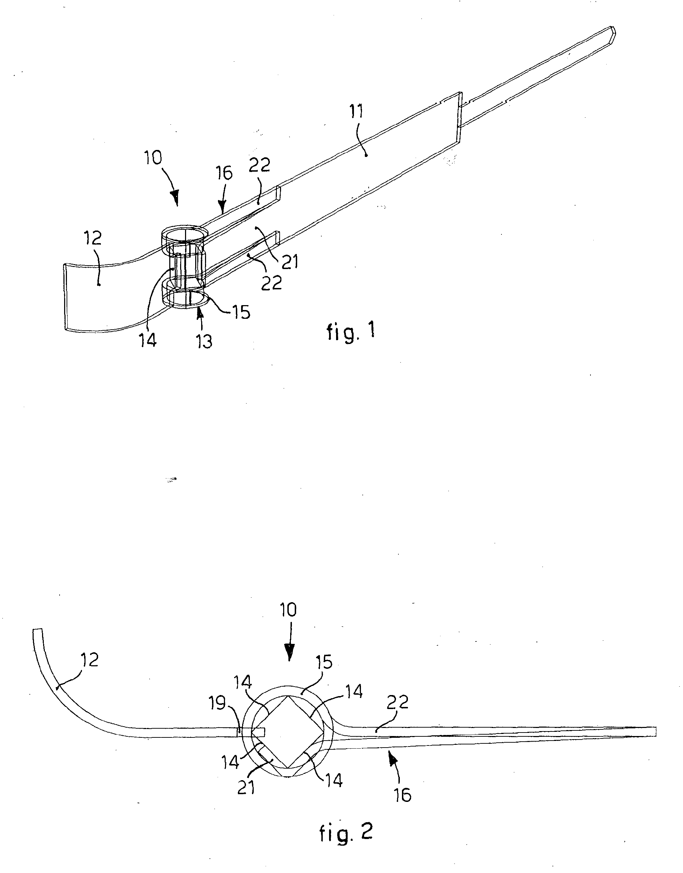

With reference to figs. 1 to 4, a hinge 10 for spectacles according to the present invention is able to be used to articulate an arm 11 to a lug 12 of the spectacles, shown only partly here. The arm 11 is able to be moved between a closed position, in which it is disposed substantially parallel to the lug 12, and an open position, in which it is disposed substantially orthogonal to the lug 12, and vice versa.

The hinge 10 comprises a first hinge element, in this case a pin 13, substantially cylindrical in shape, associated preferably but not only by welding to the lug 12, and a second hinge element, made in a single piece with the arm 11, and comprising lamellar extensions 16 of the arm 11. The arm 11 can be made of metal material, such as for example aluminum, of wood, plastic material, or a combination of these materials. The arm 11 can also be made of copper-based alloys, titanium-based alloys, for example nickel-titanium or suchlike, or other similar or comparable alloys, also in combination with the above materials.

The pin 13 is shaped so as to define, substantially in correspondence with a median portion thereof, a plurality of facetted planes 14, in this case four, defining a median body for the pin 13 having a substantially prism type shape. The planes 14 are made for example by mechanical processes of removing material, such as for example milling or other types of processes. It is not excluded that there may be more than or fewer than four facetted planes 14. The pin 13 is also provided with a housing 18, disposed between two of the facetted planes 14 and having a length equal to the length of the planes 14, inside which an insertion portion 19 of the lug 12 is able to be inserted, having a shape coordinated with the housing 18, so as to allow the lug 12 to be associated with the pin 13 and to facilitate their subsequent reciprocal welding. The pin 13 defines, above and below the median body, cylindrical portions 20.

The pin 13 is also shaped so as to define, in correspondence with its leading ends, guide and containing flanges 15, having a diameter greater than said cylindrical portions 20. The guide and containing flanges 15 are able to guide the movement of the arm 11 at least between the closed position and the open position and vice versa, and to prevent the uncoupling of the pin 13 and the lamellar extensions 16 of the second hinge element due to reciprocal sliding with respect to a longitudinal axis of the pin 13, as will be described in more detail hereafter.

The lamellar extensions 16 of the arm 11 comprise, in this case, a lamellar stop element 21 and two lamellar guide elements 22. In particular, the lamellar stop element 21 is disposed between the two lamellar guide elements 22. In this case the lamellar stop element 21 is shaped so as to define at one end a profile having a shape coordinated with at least two of said facetted planes 14. When the hinge 10 is assembled, the stop element 21 is able to cooperate through interference with the facetted planes 14 of the pin 13 so as to keep the arm 11 selectively in correspondence at least with the open position and the closed position. In particular, when the hinge 10 is assembled, the stop element 21 selectively surrounds two of said four facetted planes 14, allowing the arm 11 to stably keep its closed and/or open position.

The lamellar guide elements 22 are shaped so as to define a profile shaped at least partly in coordination with the cylindrical portions 20, that is, in particular, semi-circular.

The lamellar guide elements 22 are able to cooperate through interference with the cylindrical portions 20 of the pin 13 and are able to allow the movement of the arm at least between the closed position and the open position and vice versa. In particular, the cooperation between the lamellar guide elements 22 and the cylindrical portions 20 facilitates the movement of rotation of the second hinge element with respect to the first hinge element, to take the arm from the closed position to the open position and vice versa.

The lamellar stop element 21 and the lamellar guide elements 22 have their respective profiles disposed opposite each other, and also are advantageously provided with an elastic component such that after the application of a force on said lamellar elements 21 and 22, the profiles can be reciprocally brought together or distanced.

In a first form of preferential embodiment (figs. 1-4), the lamellar guide elements 22 are facing toward the inside of the frame of the spectacles, while the lamellar stop element 21 is facing toward the outside of the frame, substantially in sight.

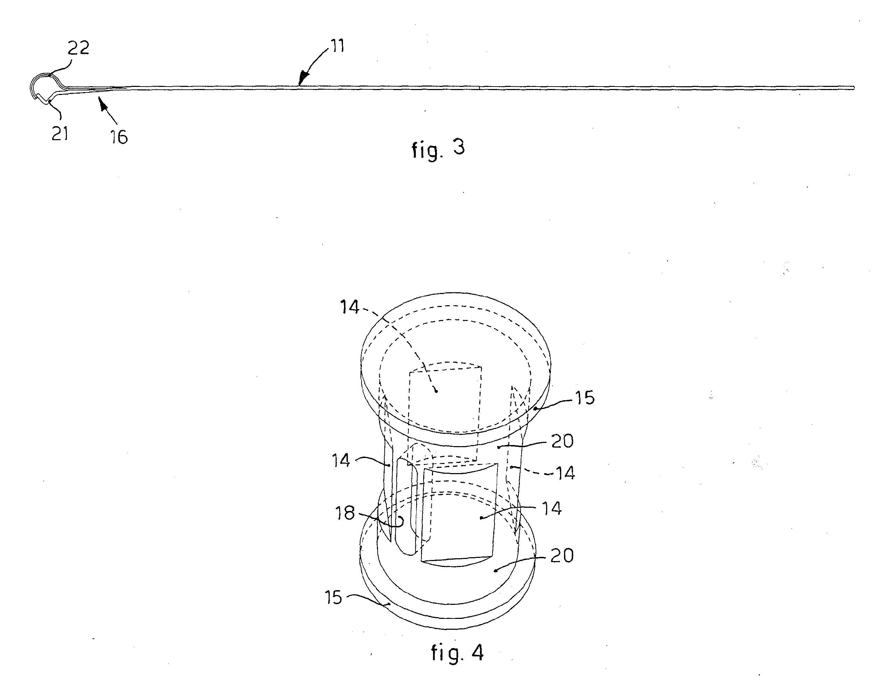

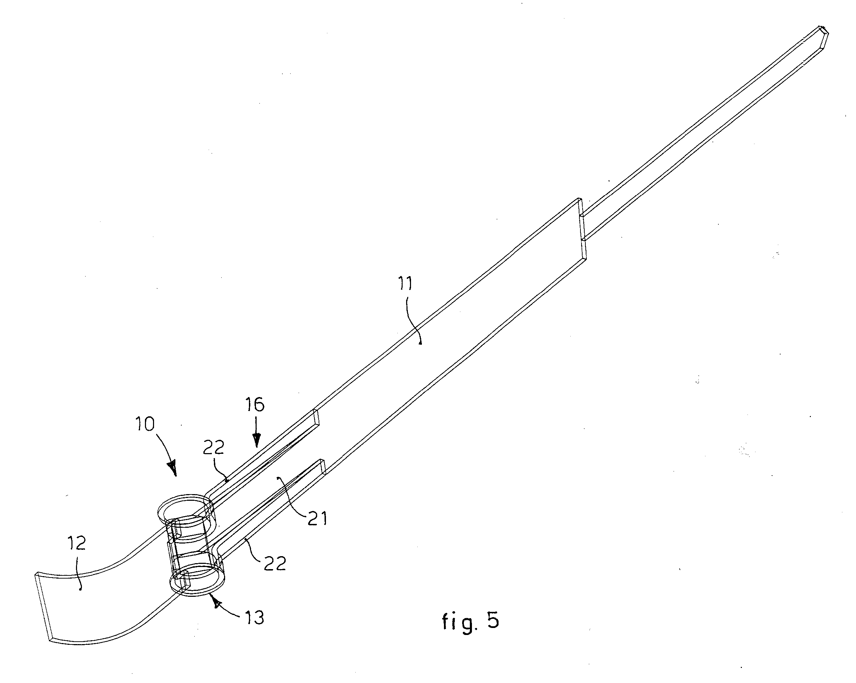

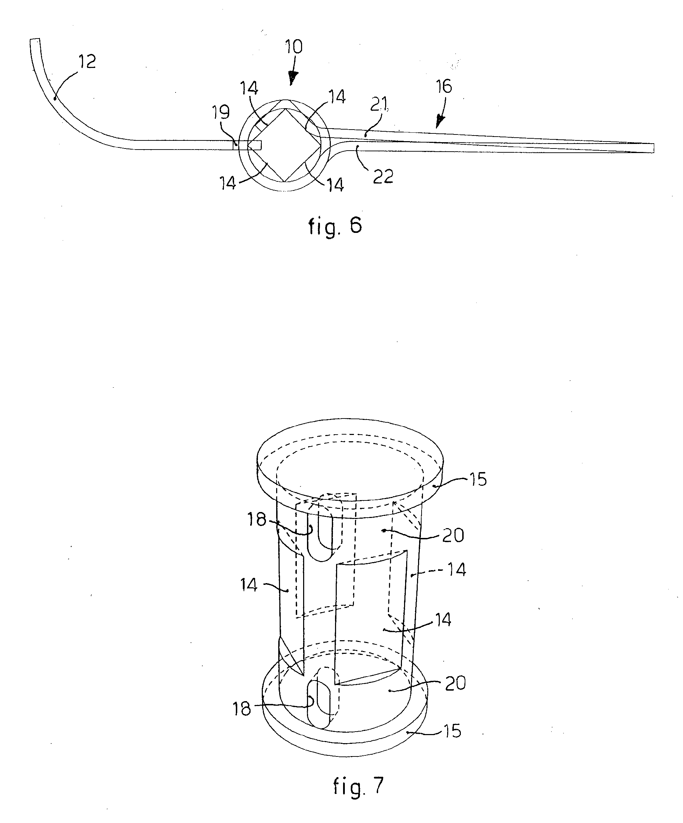

According to a constructional variant of the present invention (figs. 4-7), the lamellar guide elements 22 are facing toward the outside of the frame of the spectacles, substantially in sight, whereas the lamellar stop element 21 is facing toward the inside of the frame. In this constructional variant, the pin 13 (fig. 7) is shaped so as to define two housings 18 inside which insertion portions 19 of the lug 12 are able to be inserted, having a shape coordinated with the housings 18, to allow the association of the lug 12 with the pin 13 and to facilitate their subsequent reciprocal welding.

To articulate the arm 11 to the lug 12 using the hinge 10 according to the present invention, proceed as follows. Firstly the pin is attached to the lug 12, normally by welding. The lamellar extension 16 is then associated by interference with the pin 13, exerting a force of pressure on the arm 11, so that the lamellar guide elements 22 and the lamellar stop element 21, due to the effect of their elastic component, respectively surround the cylindrical portions 20 and the corresponding facetted planes 14. Subsequently, to move the arm 11 with respect to the lug 12, it is enough to exert on the arm 11 a force transverse to it, so that the lamellar guide elements 22 rotate with respect to the longitudinal axis of the pin 13, following the development of the cylindrical portions 20, and being guided by the guide and containing flanges 15, until the stop element surrounds the subsequent two facetted planes 14. In this way the position of the arm 11 with respect to the lug 12 is varied and a controlled and progressive movement of the arm 11 is obtained. By applying a force substantially equal and opposite that used to associate the arm 11 to the lug 12, and again due to the effect of the elastic component of the lamellar elements 21, 22, it is possible to remove the arm 11 from the lug 12 quickly and easily.

It is clear that modifications and/or additions of parts may be made to the hinge 10 as described heretofore, without departing from the field and scope of the present invention.

It is also clear that, although the present invention has been described with reference to some specific examples, a person of skill in the art shall certainly be able to achieve many other equivalent forms of hinge 10, having the characteristics as set forth in the claims and hence all coming within the field of protection defined thereby.

## Claims

1. Hinge for spectacles able to be used to articulate an arm (11) to a lug (12) of a frame for spectacles, comprising a first hinge element (13), associated or able to be associated with said lug (12), and a second hinge element (16) associated with the arm (11), said arm (11) being able to be moved between a closed position and an open position with respect to said lug (12), **characterized in that** said second hinge element (16) comprises attachment means (21, 22) able to achieve a coupling through interference of said first hinge element (13) and said second hinge element (16), in which said first hinge element (13) is shaped so as to define substantially flat stop portions (14) and said attachment means (21) are able to at least partly surround said stop portions (14) in order to maintain said arm (11) selectively and stably in correspondence at least with said open position and said closed position.

2. Hinge as in claim 1, **characterized in that** said first hinge element comprises a substantially cylindrical shaped pin (13).

3. Hinge as in claim 2, **characterized in that** said stop portions comprise facetted planes (14) of said pin (13).

4. Hinge as in claim 3, **characterized in that** said attachment means are shaped so as to define at least a substantially plane stop element (21), having a shape coordinated with said facetted planes (14), able to cooperate with said facetted planes (14) in order to maintain said arm (11) selectively in correspondence at least with said open position and said closed position.

5. Hinge as in any claim hereinbefore, **characterized in that** said first hinge element (13) comprises guide means (15) able to guide the movement of the arm (11) at least between the closed position and the open position and vice versa.

6. Hinge as in claim 5, **characterized in that** said attachment means are also shaped so as to define guiding elements (22), having a shape coordinated with said guide means (15), able to cooperate with said guide means (15) to allow the movement of the arm (11) at least between the closed position and the open position and vice versa.

7. Hinge as in claim 5, **characterized in that** said guide means (15) are also able to prevent the uncoupling of the first (13) and the second (16) hinge element due to reciprocal sliding with respect to a longitudinal axis of said first hinge element (13).

8. Hinge as in any claim hereinbefore, **characterized in that** said second hinge element (16) is made in a single piece with said arm (11).

9. Hinge as in any claim hereinbefore, **characterized in that** said attachment means comprise lamellar extensions (16) of the arm.

10. Hinge as in any claim hereinbefore, **characterized in that** said second hinge element (16) is made by plastic deformation.

11. Method to assemble a hinge (10) for spectacles able to be used to articulate an arm (11) to a lug (12) of a frame for spectacles, said hinge (10) comprising a first hinge element (13), associated or able to be associated with said lug (12), and a second hinge element (16) associated with the arm (11), said arm (11) being able to be moved between a closed position and an open position with respect to said lug (12), **characterized in that** it comprises at least an attachment step in which, by means of attachment means (21, 22) of said second hinge element (16) a coupling through interference is achieved of said first hinge element (13) and said second hinge element (16), in which said attachment means (21) at least partly surround substantially flat stop portions (14) of said first hinge element (13), maintaining said arm (11) selectively and stably in correspondence at least with said open position and said closed position.
